# EUROPEAN PATENT SPECIFICATION

(11) **EP 1 228 650 B1**
(45) Date of publication and mention of the grant of the patent: **03.01.2007**
(21) Application number: 00962757.1
(22) Date of filing: 08.09.2000
(51) Int. Cl.: H04Q 7/00

(54) **METHOD, APPARATUS, AND SYSTEM FOR ENABLING COMMUNICATION BETWEEN SECOND GENERATION AND THIRD GENERATION PACKET DATA NETWORKS**
VERFAHREN,VORRICHTUNG UND SYSTEM ZUR KOMMUNIKATIONSERMÖGLICHUNG ZWISCHEN PAKETDATENNETZEN DER ZWEITEN UND DRIITTEN GENERATION
PROCEDE, APPAREIL ET SYSTEME DE COMMUNICATION ENTRE DES RESEAUX DE PAQUETS DE DONNEES DE DEUXIEME ET DE TROISIEME GENERATION

(30) Priority: 08.09.1999 US 152748 P
(43) Date of publication of application: 07.08.2002
(73) Proprietor: TELEFONAKTIEBOLAGET LM ERICSSON (publ), 164 83 Stockholm (SE)
(72) Inventor: KRSTANOVSKI, Tony, S-431 41 Molndal (SE); RONNEKE, Hans, S-434 36 Kungsbacka (SE); SUNDELL, Hans-Olof, S-430 90 Ockero (SE); HJELMGREN, Klas, S-411 26 Goteborg (SE)
(74) Representative: Kühn, Friedrich Heinrich
(86) International application number: PCT/IB2000/001420
(87) International publication number: WO 2001/019097

(56) References cited:
- US-A- 5 793 771
- ETSI: "Universal mobile Telecommunications System (UMTS).General Packet Radio Service (GPRS).GPRS Tunnelling Protocol (GTP) across the Gn and Gp Interface.(3G TS 29.060 version 3.3.0 Release 1999)" EUROPEAN TELECOMMUNICATION STANDARD, January 2000 (2000-01), pages 1-78, XP002160540
- BERRUTO E: "RESEARCH ACTIVITIES ON UMTS RADIO INTERFACE, NETWORK ARCHITECTURES,AND PLANNING" IEEE COMMUNICATIONS MAGAZINE,US,IEEE SERVICE CENTER. PISCATAWAY, N.J, vol. 36, no. 2, 1 February 1998 (1998-02-01), pages 82-95, XP000740416 ISSN: 0163-6804
- SCHIEDER A ET AL: "GRAN - A NEW CONCEPT FOR WIRELESS ACCESS IN UMTS" ISS. WORLD TELECOMMUNICATIONS CONGRESS. (INTERNATIONAL SWITCHING SYMPOSIUM),CA,TORONTO, PINNACLE GROUP, 21 September 1997 (1997-09-21), pages 339-345, XP000704485
- BRASCHE G ET AL: "CONCEPTS, SERVICES, AND PROTOCOLS OF THE NEW GSM PHASE 2+ GEBERAKL PACKET RADIO SERVICE" IEEE COMMUNICATIONS MAGAZINE,US,IEEE SERVICE CENTER. PISCATAWAY, N.J, vol. 35, no. 8, 1 August 1997 (1997-08-01), pages 94-104, XP000704443 ISSN: 0163-6804

## Description

This invention relates generally to a method, apparatus, and system for enabling communication between networks. More particularly, this invention relates to a method, apparatus and system and method for enabling communication between second generation and third generation packet data networks.

There are many types of public land mobile networks (PLMNs), e.g., a Global System for Mobile Communications (GSM), a Digital Cellular System for Mobile Communications (DCS 1800), and a Personal Communication System (PCS). These networks provide a wide range of services and facilities to mobile subscribers that are roaming around between individual cells of the mobile radio communication networks. These networks support circuit-switched communication.

Global Packet Radio Service (GPRS) has been developed to support packet-switched communication. GPRS is supported in second generation systems, e.g., second generation GSM systems.

A Universal Mobile Telecommunications System (UMTS) is currently being standardized within the 3rd Generation Partnership Project (3GPP), which is a cross-regional cooperative project to develop a third generation standard which can be accepted in as many regions of the world as possible. The UMTS will build on the success of the GSM system.

The UMTS will support both circuit-switched data communication and packet-switched communication. Thus, the UMTS will be useful for exchanging voice and non-voice data quickly and efficiently.

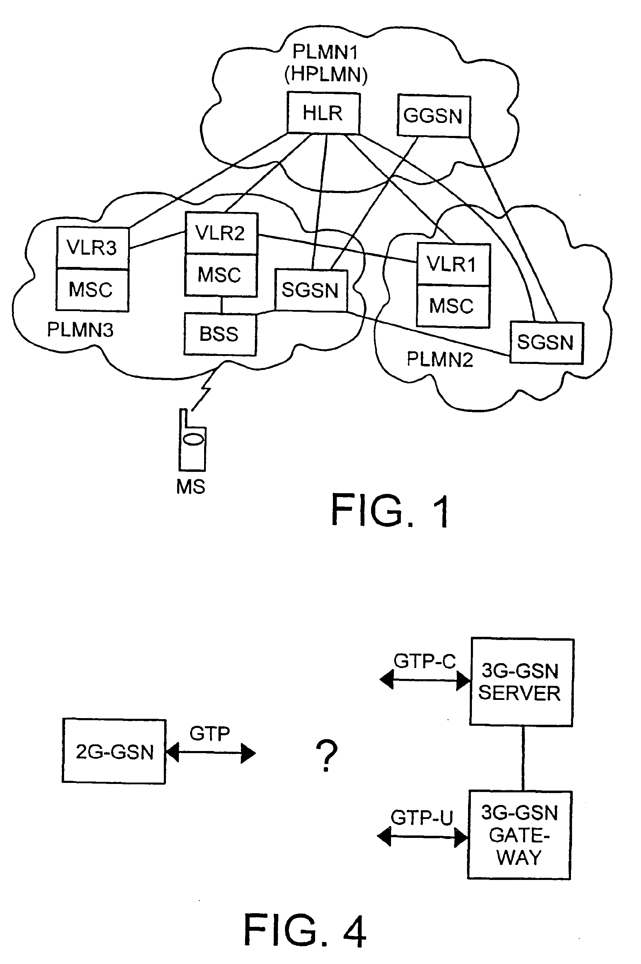

FIG. 1 illustrates an exemplary network supporting circuit-switched and packet-switched communication. In FIG. 1, a mobile station (MS) communicates with one or more Public Land Mobile Networks (PLMNs). A first network (PLMN1) is considered the Home PLMN (HPLMN) and includes a Home Location Register (HLR) containing subscriber data for subscribers to the network. The HPLMN also includes a Gateway GPRS Support Node (GGSN) for enabling packet-switched communication. PLMN2 and PLMN3 are considered visiting PLMNs. Each PLMN, other than the HPLMN, includes one or more Mobile Switching Centers (MSCs) for performing circuit switching for the mobile station and one or more Visitor Location Registers (VLRs) for storing data regarding subscribers to other networks that may be roaming in the network. The PLMNs also include Serving GPRS Support Nodes (SGSNs) for supporting packet-switched communication.

The HLR of PLMN1 communicates with VLR1, VLR2, and VLR3 for updating subscriber information, e.g., when a subscriber roams into an area served by one of these VLRs. The VLRs also communicate with each other.

The SGSNs are at the same hierarchal level in the network as the MSC/VLRs and function in a similar manner as the VLRs, but for packet-switched communication. The SGSNs keep track of the location of the GPRS user, perform security functions, and handle access control. The SGSNs communicate with the HLR to obtain subscriber profiles. The SGSNs also communicate with each other, and the SGSN of PLMN3 communicates with the base station subsystem (BSS) which, in turn, communicates with the MSC connected to VLR2 and with the MS.

The GGSN is the interconnection point for packet data between the GPRS network and the public data network. The GGSN is connected to the SGSNs via an Internet Protocol (IP) backbone. User data, e.g., from a GPRS terminal to the Internet, is sent encapsulated over the IP Backbone.

To accomplish roaming between GPRS and UMTS packet data networks, signaling between the networks and forwarding of user data are required. However, the network architectures for GPRS and UMTS networks are different, thus making interaction between the networks difficult.

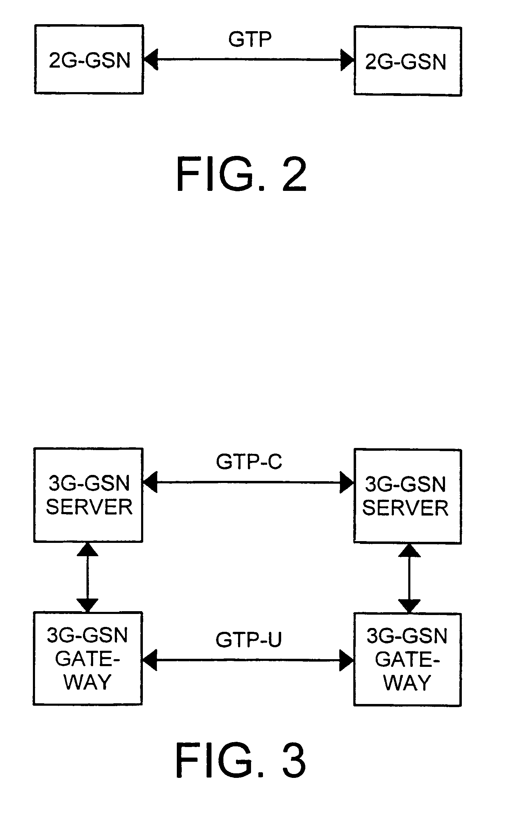

In a second generation GPRS network, communication is performed node to node, as shown in FIG. 2. Second generation GPRS support nodes (2G-GSNs), e.g., GGSNs and SGSNs, communicate with each other using a GPRS tunneling protocol (GTP) described in, e.g., "GPRS Tunnelling Protocol (GTP) across the Gn and Gp Interface", GSM 09.60 ver. 6.7.0 release 1997, Draft ETSI EN 301 347 v6.7.0 (July 2000).

In a third generation UMTS network, communication is performed in two different planes, as shown in FIG. 3. In FIG. 3, third generation GSN (3G-GSN) servers communicate with each other using a GPRS tunneling control protocol (GTP-C), and the 3G-GSN gateways also communicate with each other using a GPRS tunneling user protocol (GTP-U). The 3G-GSN gateways also communicate with the 3G-GSN servers using a gateway control protocol (GCP). The 3G-GSN gateways and servers may be GGSNs and/or SGSNs.

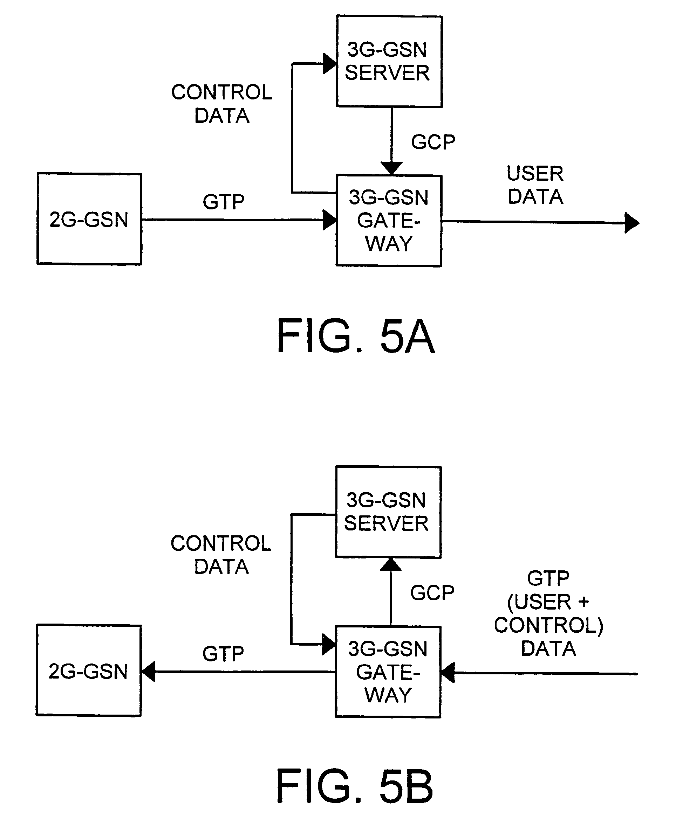

Problems occur when a second generation GPRS node (2G-GSN) attempts to interact with a third generation UMTS node (3G-GSN) because the 2G-GSN nodes and the 3G-GSN nodes support different kinds of protocols. As shown in FIG. 4, the GTP used for communication between 2G-GSN nodes tunnels both user and control data, while the GTP-C used for communicating between 3G-GSN servers tunnels only control data, and the GTP-U used for communicating between 3G-GSN gateways tunnels only user data. There is no protocol by which the 2G-GSN can communicate with a 3G-GSN server or a 3G-GSN gateway. Also, the GTP can only address one node, whereas the 3G-GSN Server and 3G-GSN Gateway are placed in two different nodes.

Currently, there is no provision permitting a 2G-GSN node to interact with the 3G-GSN server or a 3G-GSN gateway.

US-5793771 shows a system and a method for protocol translation. More specifically, this document is directed toward a gateway within a telecommunication network environment for providing protocol translation between CCITT SS7 (a connectionless protocol) and a connection-oriented protocol, such as NSPP and TCP. For inbound service, the communication gateway translates from the non-SS7 protocol and returns a response that translates from the non-SS7 protocol to SS7. The communication gateway includes a SS7 module, which manages multiple signaling links over which SS7 queries and responses are sent. This document forms the preamble of claim 1

Thus, there is a need for a technique permitting 2G-GSNs to interact with 3G-GSN servers and 3G-GSN gateways to permit roaming between GPRS and UMTS networks.

### SUMMARY

It is therefore an object of the invention to permit interaction of different networks such as second generation GPRS and third generation UMTS networks. It is a further object of the invention to permit roaming of a subscriber between different networks.

According to exemplary embodiments, these and other objects are achieved by a method, apparatus and system for communicating between a first network in which control functions and user functions are combined in a first node and a second network in which user functions are implemented in a second node, and control functions are implemented in a third node. A determination is made whether data received includes control data. If so, control data is extracted from the data and forwarded to the third node. The control data is used for resource handling. The extraction and forwarding may be performed in the first, second, or third node or at any place in between. If the received data does not contain control data, control data is added at the third node and forwarded to the second node. The first network may be a second generation data packet network, e.g., a Global Packet Radio Service (GPRS) network, and the second network may be a third generation packet data network., e.g., a Universal Mobile Telecommunication System (UMTS) network.

### BRIEF DESCRIPTION OF THE DRAWINGS

The features, objects, and advantages of the invention will become apparent by reading this description in conjunction with the accompanying drawings, in which like reference numerals refer to like elements and in which:
FIG. 1 illustrates an exemplary network supporting circuit-switched and packet-switched communication;
FIG. 2 illustrates an exemplary second generation GPRS communication architecture;
FIG. 3 illustrates an exemplary third generation UMTS communication architecture;
FIG. 4 illustrates a problem encountered when attempting to interact between UMTS and GPRS networks;
FIGS. 5A and 5B illustrate exemplary systems for communicating between a second generation GPRS network and a third generation UMTS network;
FIG. 6 illustrates a GTP header; and
FIG. 7 illustrates a method for communicating between a second generation GPRS network and a third generation UMTS network.

### DETAILED DESCRIPTION

The following describes exemplary embodiments of methods and apparatus that enable different networks to communicate with each other. Communication is made possible by using a protocol splitter to separate user data and control data.

FIGS. 5A and 5B illustrate exemplary systems for enabling communication between a second generation network and a third generation network.

In FIG. 5A, communication in the direction from the 2G-GSN node to the 3G-GSN gateway is shown, while in FIG. 5B, communication in the direction of the 3G-GSN gateway to the 2G-GSN is shown.

Referring to FIG. 5A, when control data is transferred from a 2G-GSN node to the 3G-GSN gateway, a GTP protocol splitter extracts the control data from the GTP tunnel and sends it to the 3G-GSN server. In FIG. 5A, the GTP protocol splitter is included in the 3G-GSN gateway. The 3G-GSN gateway processes the user data from the 2G-GSN node as if it were a 2G-GGSN. The 3G-GSN server processes the control data, and resource handling is performed using a control protocol, e.g., a gateway control protocol (GCP), in a server-gateway control loop. Resource handling is a function implemented in a 3G-SGSN server that checks that there is enough resources in terms of hard disk and CPU memory space before allowing a user to attach to the server. If there are no resources left, the user will be denied access to the server. It will be appreciated that many forms of GCP may be used, e.g., H.248, XCP, or Internet Engineering Task Force (IETF) MEGACO.

To distinguish between control data and user data in the data received at the protocol splitter functionality in the 3G-GSN gateway, two fields are provided in the GTP header in each packet: a version number field, and a message type field. The version number field may be bits 6-8 in octet 1 of the GTP header as described in GSM 09.60, ver. 6.7.0 (which was cited above and is expressly incorporated here by reference). A value 0 in the version number field advantageously corresponds to the GTP, and other values may be used to indicate other versions of GTP, e.g., a protocol in which control data and user data are integrated. The message type field in the GTP header indicates whether the GTP packet is a control message or user data. The message type field may be octet 2 of the GTP header and preferably has a predetermined value, e.g., 255 (in decimal), for user data packages, and other values indicate control data packages.

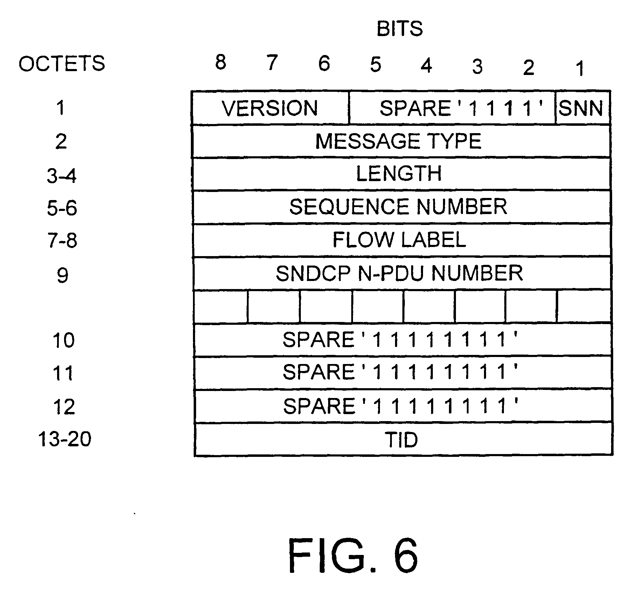

FIG. 6 is an outline of a GTP header that includes twenty octets, including the version number and message type fields described above, and several other fields, including a number of spare 1 bits, a flag SNN, a length indicating the length in octets of the GTP message, a sequence number that is a transaction identity for signaling messages and an increasing sequence number for tunnelled original packets (i.e., the payload tunnelled in the GTP tunnel), a flow label that unambiguously identifies a GTP flow, a tunnel identifier (TID). It will be appreciated that FIG. 6 depicts only one of many configurations of GTP header that can be used.

The GTP protocol splitter functionality, together with the server-gateway control loop, enables communication between a GPRS traditional network architecture and an UMTS server-gateway network architecture. Advantageously, all interfaces conform to applicable standards.

Control signaling in the opposite direction, i.e., from the 3G-GSN network to the 2G-GSN network, is simpler, as illustrated by FIG. 5B. The 3G-GSN server sends GTP-C messages to the 3G-GSN gateway, which converts them to GTP and forwards them to the 2G-GSN node. A command on the GTP-C link to the 3G-GSN server from the GTP-splitter, e.g., in the 3G-GSN gateway, results in a new command on the GCP link back to the 3G-GSN gateway.

An event in the 3G-GSN gateway, triggered by, e.g., an incoming GTP control packet as in FIG. 5B, triggers a GCP-notification to be sent to the 3G-GSN server. The 3G-GSN server then sends GTP-C packets to the 3G-GSN gateway, which converts them to GTP packets and forwards them to the 2G-GSN node.

By implementing the GTP protocol splitter and a server-gateway control loop in the 3G-GSN gateway, full integration with the second generation GPRS network is made possible. The GTP protocol splitter may be implemented in a 3G-GSN gateway. The user traffic is processed inside the 3G-GSN gateway, and the control traffic is forwarded to and from the corresponding 3G-GSN server. Therefore, no additional protocols are required for the server. Also, the network operator does not require additional equipment to make the UMTS network interact with GPRS. The converter enables the operator to introduce UMTS in a limited area without affecting the 2G-GSN nodes. Communication between traditional network architecture and a server-gateway architecture is enabled, and the IP address problem when these architectures communication is solved. Traditional combined nodes (2G-GSN) do not need to be upgraded to communicate with server-gateway nodes (3G-GSN).

The 3G-GSN gateway acts as a 2G-SGSN node for uplink communication, i.e., for traffic from a 3G-SGSN gateway to a 2G-SGSN node. However, the downlink traffic is also made possible, e.g., when the 2G-GSN node is a GPRS GGSN. In such a case, for downlink traffic, the GTP still go to the 3G-GSN gateway, but the 3G-GSN gateway acts as a 2G-SGSN.

Although described above as being located in the 3G-GSN gateway, the GTP protocol splitter may be physically located in a separate box or node. In terms of hardware, the GTP splitter can be implemented in an integrated circuit, such as a field programmable gate array (FPGA) or other application specific integrated circuit (ASIC), mounted on a printed circuit board, which preferably is an already existing interface board in the node.

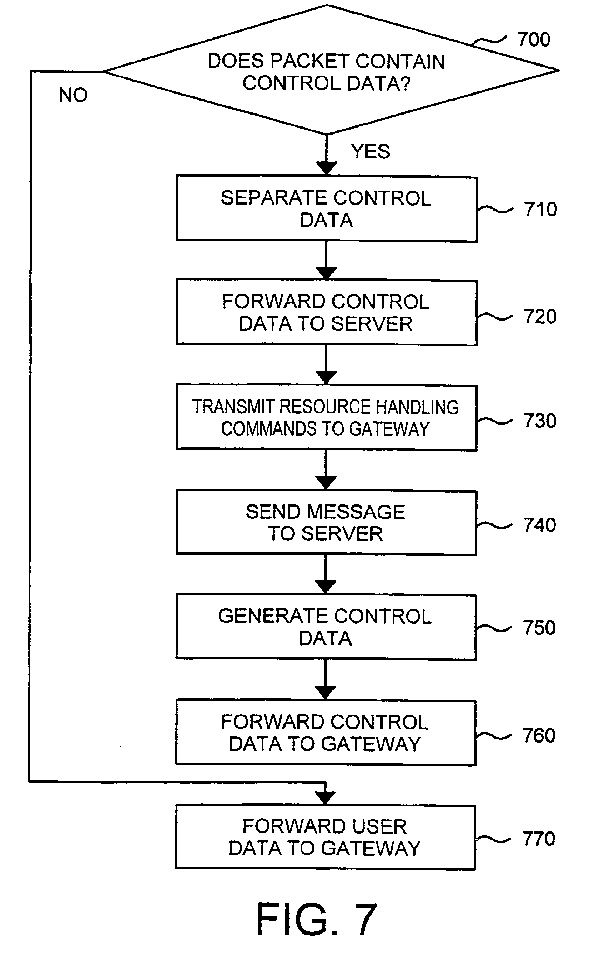

FIG. 7 illustrates an exemplary method for communicating between different networks. The method begins at step 700 at which a determination is made whether data received at the protocol splitter contains control data by detecting the GTP header. If the received data contains control data, the control data is separated from the received data at step 710 and forwarded to the 3G-GSN server at step 720. The 3G-GSN server then transmits commands for resource handling to the 3G-GSN gateway via the GCP at steps 730-760. If, at step 700, it is determined that the received data does not contain control data, the 3G-GSN gateway simply processes the packet and forwards it in step 770.

It will be appreciated by those of ordinary skill in the art that this invention can be embodied in other specific forms without departing from its essential character. The embodiments described above should therefore be considered in all respects to be illustrative and not restrictive.

## Claims

1. A method for enabling communication between a first network in which control functions and user functions are combined in a first node (2G-GSN) and a second network in which user functions and control functions are separately implemented in second and third nodes, respectively, **characterized in that**
the first node (2G-GSN) is a second generation Global Packet Radio Service (GPRS) support node,
the second node (3G-GSN GATEWAY) is a third generation GPRS support node gateway and
the third node (3G-GSN SERVER) is a third generation GPRS support node server, a GTP (GPRS Tunneling Protocol) protocol splitter moreover being provided,
the method comprising the steps of:
- receiving a communication in the GTP protocol splitter; determining whether the received communication contains control data (700);
- if the received communication contains control data, separating control data (710) from the received communication; and forwarding the control data to the third node (3G-GSN-SERVER) (720).

2. The method of claim 1, wherein if the received communication does not contain control data (770), the received communication being user data is forwarded to the second node (3G-GSN GATEWAY).

3. The method according to claim 1, wherein the control data forwarded to the third node (3G-GSN-SERVER) for processing and resource handling (730-750) involves using a gateway control protocol (GCP).

4. The method of claim 1, wherein a determination is made (700) whether data received from the first node (2G-GSN) at the protocol splitter contains control data by detecting the GTP (GPRS Tunneling Protocol) header.

5. The method of claim 1, wherein the protocol splitter is being located in the second node (3G-GSN GATEWAY).

6. The method of claim 1, wherein the protocol splitter is being located in a separate node.

7. The method of claim 1, wherein the first network is a second generation Global Packet Radio Service (GPRS) network, and the second network is a third generation Universal Mobile Telecommunication System (UMTS) network.

8. The method of claim 7, wherein when control data is transferred from the first node (2G-GSN) to the second node (3G-GSN-SERVER), the GTP (GPRS Tunneling Protocol) splitter extracts the control data from a GTP tunnel and sends it to the third node (3G-GSN-SERVER).

9. The method of claim 3 and 7, wherein when signaling from the second network to the first network, a GCP-notification is sent to the third node (3G-GSN-SERVER) the third node (3G-GSN-SERVER) sends GTP-C (GPRS Tunneling Control Protocol) messages to the second node (3G-GSN-GATEWAY), which converts the messages to GTP (GPRS Tunneling Protocol) and forwards the messages to the first node (2G-GSN).

10. The method of claim 1, wherein the first node is a Serving GPRS Support Node (SGSN) or a Gateway GPRS Support Node (GGSN).

## Patentansprüche

1. Verfahren zur Ermöglichung von Kommunikation zwischen einem ersten Netz, in dem Steuerfunktionen und Benutzerfunktionen in einem ersten Knoten (2G-GSN) kombiniert sind, und einem zweiten Netz, in dem Benutzerfunktionen und Steuerfunktionen separat in zweiten bzw. dritten Knoten implementiert sind, **dadurch gekennzeichnet, dass**
der erste Knoten (2G-GSN) eine GPRS-(globaler paketvermittelter Funkdienst)-Paketvermittlungsstelle der zweiten Generation ist,
der zweite Knoten (3G-GSN GATEWAY) ein GPRS-Paketvermittlungsstellen-Gateway der dritten Generation ist und
der dritte Knoten (3G-GSN SERVER) ein GPRS-Paketvermittlungsstellen-Server der dritten Generation ist, ein GTP-(GPRS-Tunnelprotokoll)-Protokollteiler außerdem bereitgestellt wird,
das Verfahren die folgenden Schritte umfassend:
- Empfangen einer Kommunikation in dem GTP-Protokollteiler; Bestimmen, ob die empfangene Kommunikation Steuerdaten enthält (700);
- wenn die empfangene Kommunikation Steuerdaten enthält, Trennen der Steuerdaten (710) von der empfangenen Kommunikation; und Weiterleiten der Steuerdaten zu dem dritten Knoten (3G-GSN-SERVER) (720).

2. Verfahren von Anspruch 1, wobei, wenn die empfangene Kommunikation keine Steuerdaten enthält (770), die empfangene Kommunikation bestehend aus Benutzerdaten zu dem zweiten Knoten (3G-GSN GATEWAY) weitergeleitet wird.

3. Verfahren von Anspruch 1, wobei die Steuerdaten, die zu dem dritten Knoten (3G-GSN-SERVER) für Verarbeitung und Betriebsmittelsteuerung weitergeleitet wurden (730-750), Verwendung eines Gateway-Steuerprotokolls (GCP) umfassen.

4. Verfahren von Anspruch 1, wobei durch Erkennen des GTP-(GPRS-Tunnelprotokoll)-Kopfes eine Bestimmung erfolgt (700), ob Daten, die von dem ersten Knoten (2G-GSN) an dem Protokollteiler empfangen wurden, Steuerdaten enthalten.

5. Verfahren von Anspruch 1, wobei der Protokollteiler sich in dem zweiten Knoten (3G-GSN GATEWAY) befindet.

6. Verfahren von Anspruch 1, wobei der Protokollteiler sich in einem separaten Knoten befindet.

7. Verfahren von Anspruch 1, wobei das erste Netz ein GPRS-(globaler paketvermittelter Funkdienst)-Netz der zweiten Generation ist und das zweite Netz ein UMTS-(universelles Mobilfunk-Telekommunikationssystem)-Netz der dritten Generation ist.

8. Verfahren von Anspruch 7, wobei, wenn Steuerdaten von dem ersten Knoten (2G-GSN) zu dem zweiten Knoten (3G-GSN-SERVER) übertragen werden, der GTP-(GPRS-Tunnelprotokoll)-Teiler die Steuerdaten von einem GTP-Tunnel extrahiert und sie zu dem dritten Knoten (3G-GSN-SERVER) sendet.

9. Verfahren von Anspruch 3 und 7, wobei, wenn Signalisierung von dem zweiten Netz zu dem ersten Netz erfolgt, eine GCP-Benachrichtigung zu dem dritten Knoten (3G-GSN-SERVER) gesendet wird, der dritte Knoten (3G-GSN-SERVER) GTP-C-(GPRS-Tunnelsteuerprotokoll)-Mitteilungen zu dem zweiten Knoten (3G-GSN GATEWAY) sendet, der die Mitteilungen in GTP (GPRS-Tunnelprotokoll) umwandelt und die Mitteilungen zu dem ersten Knoten (2G-GSN) weiterleitet.

10. Verfahren von Anspruch 1, wobei der erste Knoten eine versorgende GPRS-Paketvermittlungsstelle (SGSN) oder eine Gateway-GPRS-Paketvermittlungsstelle (GGSN) ist.

## Revendications

1. Procédé pour permettre une communication entre un premier réseau dans lequel des fonctions de commande et des fonctions d'utilisateur sont combinées au niveau d'un premier noeud (2G-GSN) et un second réseau dans lequel des fonctions d'utilisateur et des fonctions de commande sont respectivement mises en oeuvre de manière séparée au niveau de second et troisième noeuds, **caractérisé en ce que**
le premier noeud (2G-GSN) est un noeud de support de Service Radio par Paquets Global (GPRS) de seconde génération,
le second noeud (3G-GSN-GATEWAY) est une passerelle de noeud de support GPRS de troisième génération et
le troisième noeud (3G-GSN-SERVER) est un serveur de noeud de support GPRS de troisième génération, un séparateur de protocole GTP (protocole de tunnelisation GPRS) étant en outre prévu,
le procédé comprenant les étapes de:
- réception d'une communication dans le séparateur de protocole GTP; détermination de si oui ou non la communication reçue contient des données de commande (700); et
- si la communication reçue contient des données de commande, séparation des données de commande (710) à partir de la communication reçue; et renvoi des données de commande sur le troisième noeud (3G-GSN-SERVER) (720).

2. Procédé selon la revendication 1, dans lequel, si la communication reçue ne contient pas de données de commande (770), la communication reçue constituée par des données d'utilisateur est renvoyée sur le second noeud (3G-GSN-GATEWAY).

3. Procédé selon la revendication 1, dans lequel les données de commande qui sont renvoyées sur le troisième noeud (3G-GSN-SERVER) pour un traitement et une manipulation de ressources (730-750) mettent en jeu l'utilisation d'un protocole de commande de passerelle (GCP).

4. Procédé selon la revendication 1, dans lequel une détermination est réalisée (700) en ce qui concerne si oui ou non des données qui sont reçues depuis le premier noeud (2G-GSN) au niveau du séparateur de protocole contiennent des données de commande en détectant l'entête GTP (protocole de tunnelisation GPRS).

5. Procédé selon la revendication 1, dans lequel le séparateur de protocole se trouve dans le second noeud (3G-GSN-GATEWAY).

6. Procédé selon la revendication 1, dans lequel le séparateur de protocole se trouve dans un noeud séparé.

7. Procédé selon la revendication 1, dans lequel le premier réseau est un réseau de Service Radio par Paquets Global (GPRS) de seconde génération et le second réseau est un réseau de Système de Télécommunication Mobile Universel (UMTS) de troisième génération.

8. Procédé selon la revendication 7, dans lequel, lorsque des données de commande sont transférées depuis le premier noeud (2G-GSN) jusqu'au second noeud (3G-GSN-GATEWAY), le séparateur GTP (protocole de tunnelisation GPRS) extrait les données de commande à partir d'un tunnel GTP et les envoie sur le troisième noeud (3G-GSN-SERVER).

9. Procédé selon les revendications 3 et 7, dans lequel, lors d'une signalisation depuis le second réseau jusqu'au premier réseau, une notification GCP est envoyée sur le troisième noeud (3G-GSN-SERVER), le troisième noeud (3G-GSN-SERVER) envoie des messages GTP-C (protocole de commande de tunnelisation GPRS) sur le second noeud (3G-GSN-GATEWAY), lequel convertit les messages selon GTP (protocole de tunnelisation GPRS) et renvoie les messages sur le premier noeud (2G-GCN).

10. Procédé selon la revendication 1, dans lequel le premier noeud est un noeud de support GPRS de desserte (SGSN) ou un noeud de support GPRS de passerelle (GGSN).
